# EUROPEAN PATENT SPECIFICATION

(11) **EP 0 314 527 B1**
(45) Date of publication and mention of the grant of the patent: **07.07.1993**
(21) Application number: 88310236.0
(22) Date of filing: 31.10.1988
(51) Int. Cl.: B60J 7/04, B62D 33/08, B62D 35/00

(54) **Trailer with lifting aerofoil**
Anhänger mit erhöhtem Spoiler
Remorque à déflecteur d'air relevable

(30) Priority: 30.10.1987 GB 8725440
(43) Date of publication of application: 03.05.1989
(73) Proprietor: AVELING BARFORD (MACHINES) PLC, GB-Lincolnshire NG31 6JE (GB)
(72) Inventor: Prescott, Paul Conway, Ripon North Yorkshire, HG4 2HV (GB)
(74) Representative: Allen, Oliver John Richard

(56) References cited:
- GB-A- 2 166 392
- US-A- 4 553 782

## Description

The invention relates to trailers, semi-trailers or lorries having a lifting roof.

A vehicle with a lifting roof is described in GB-A-2166392. The roof assembly is supported on pillars which house lifting devices operable to raise or lower the roof assembly relative the load platform of the vehicle.

It is known for trailers and the like to be fitted at the front end with a curved aerofoil which allows air to flow smoothly over the trailer when in motion and thus reduces air turbulence. Such an arrangement is described, for example, in US-A-4553782 with particular reference to tandomly coupled vehicles. The towed trailing vehicle is fitted with an air deflector at an upper leading end portion thereof but below the top panel of the vehicle.

The aerofoil is usually fixed to the front wall of the trailer or to the front wall and roof to provide a curved surface. A problem arises in fitting such aerofoils to trailers which have lifting roofs because in order to raise the roof the aerofoil must be detached from the trailer if it is attached to both the roof and front wall or else a space is left between the raised roof and the top of the front wall. It is not efficient to run the trailer with the roof raised without the aerofoil, because of undue drag created by air turbulence, and because the load is exposed.

In accordance with the invention, a trailer, semi-trailer, or van body has a roof which may be lifted between a normal and an upward position, characterised in that the roof has an aerofoil attached at its front end, which aerofoil extends downwardly to a level below the lower edge of the gap between the roof and the top of the front of the trailer body when the roof is raised.

Preferably the roof has vertically arranged "stake" rails engaging with the corner pillars of the front of the trailer, the stake rails conforming to the shape of the pillars and being dimensioned to fit therein, means being provided to raise the stake rails relative to the pillars when the roof is to be lifted. The aerofoil may be attached at its upper end to the roof or a roof bearing member and at its lower end to extensions of the stake rails protruding beyond the pillars.

The pillars and corresponding stake rails may have a substantially C-shaped cross-section.

The top end of each stake rail may be attached to the roof panel but preferably is attached to a roof support or lifting header which runs perpendicular to the stake rail along the front face of the trailer. The lifting header may have a substantially C-shaped cross-section and is preferably provided with a protruding portion of L-shaped cross-section to which the top end of the aerofoil can be attached. The lifting header may also support cant rails or the like which run along the side of the trailer.

When the roof is in the lowered position, the lifting header rests upon a fixed header supported by, and extending between, the front corner pillars.

The means to raise the stake rails within the pillars suitably comprise a bolt fixed through each stake rail, the free end of which protrudes through and rides in a vertical slot formed in the corresponding pillar and is attached to a cable and pulley system.

On operation of the pulley, the bolts attached to the stake rails are raised within the vertical slots of the corresponding pillars, thus raising the stake rails. The stake rails raise the lifting header and roof. Since the aerofoil is attached to both the stake rails and the lifting header, this is simultaneously raised the same distance as the roof, for example, about 16 inches (40 cm).

Thus the invention provides means whereby a lifting-roof trailer can be run with tile roof raised to facilitate extra loading but still have the advantageous air-flow effects of the aerofoil.

The invention will now be described by way of example with reference to the accompanying drawings in which:
Figure 1 is a perspective view of a front top corner of one embodiment of a trailer or van-body in accordance with the invention with the roof in its raised position;
Figure 2 is a part sectional view of the top front corner of the trailer when the roof is in the lowered position;
Figure 3 is a horizontal sectional view through the stake rail and corner pillar 1 and;
Figure 4 is a part longitudinal section through the stake rail and pillar and the fixed and lifting headers with the roof in a raised condition but showing the pulley and cable mechanism for raising the stake rail.

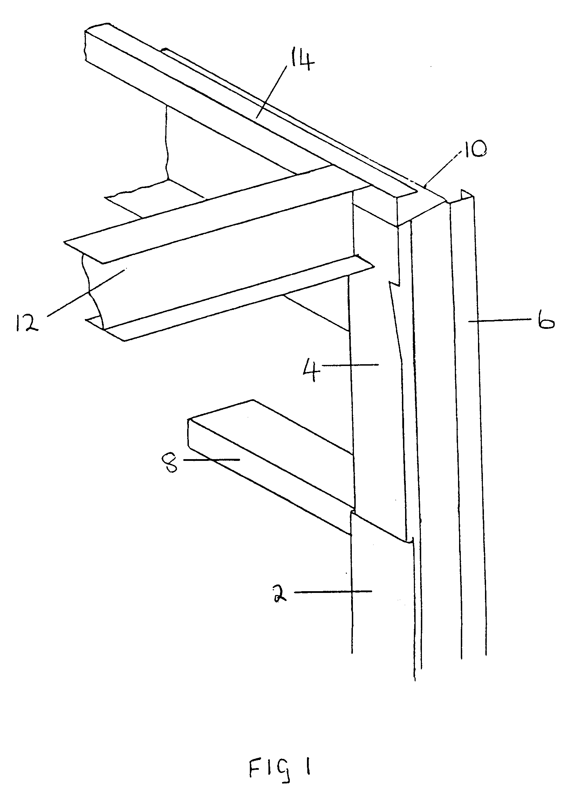

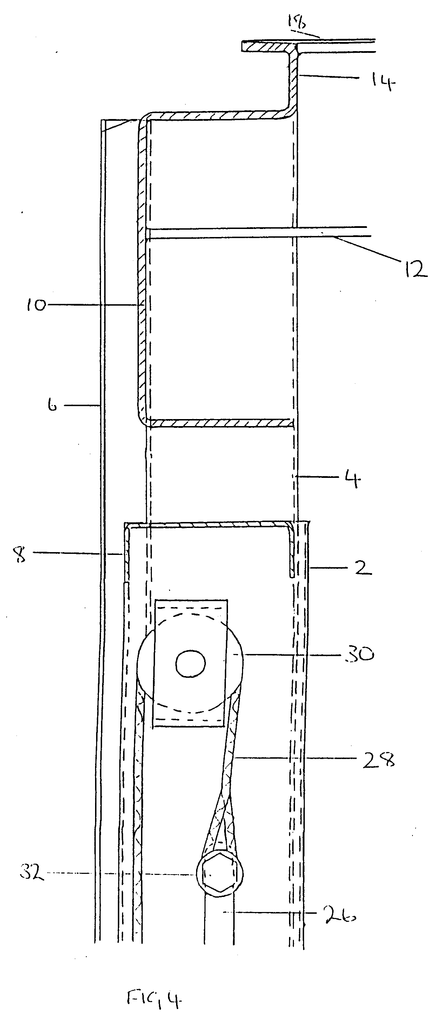

Referring to Figure 1, a trailer fitted with a lifting roof and an aerofoil in accordance with the invention comprises vertical pillar members 2 fitted at the front corners of the trailer. Each pillar 2 has a substantially C-shaped cross-section with its open side facing the side wall of the trailer. Fitted within and shaped to conform to the shape of each pillar 2 is a stake rail 4 also of substantially C-shaped cross-section except for an additional portion 6 of L-shaped cross-section (see Figure 4) which partially extends around the outside of the pillar 2, the function of which will be hereinafter described.

Supported by and projecting perpendicularly from the top of the pillars 2 is a fixed header 8 which runs along the top of the front wall of the trailer. The top of each stake rail 6 engages a "lifting" header 10 which runs along the top front edge of the trailer above the fixed header 8 and to which the roof is attached. As can be further seen in Figure 1, the lifting header 10 is connected to cant rails 12 which run along the sides of the trailer to support side walls or curtains as well as the roof.

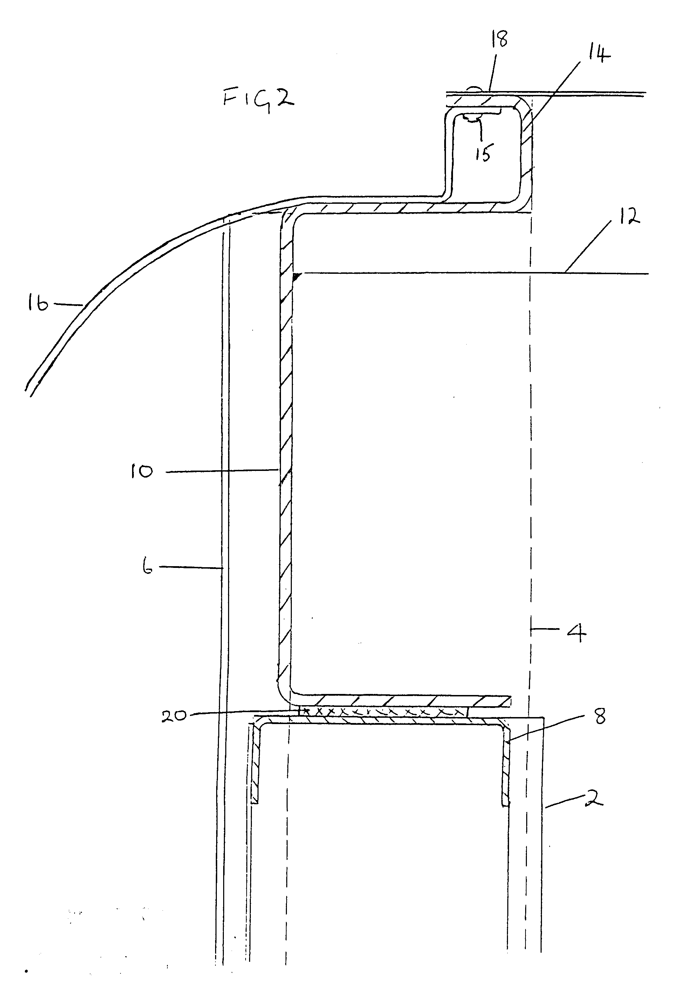

Referring to Figure 2 the lifting header 10 is of substantially C-shaped cross-section having a portion 14 of L-shaped cross-section. The outer end of the L-section is rivetted at 15 to the top end of a curved aerofoil 16 and to a roof sheet 18.

When the roof is in its lowest position the lifting header 10 rests upon the fixed header 8, a bearing 20 being provided therebetween.

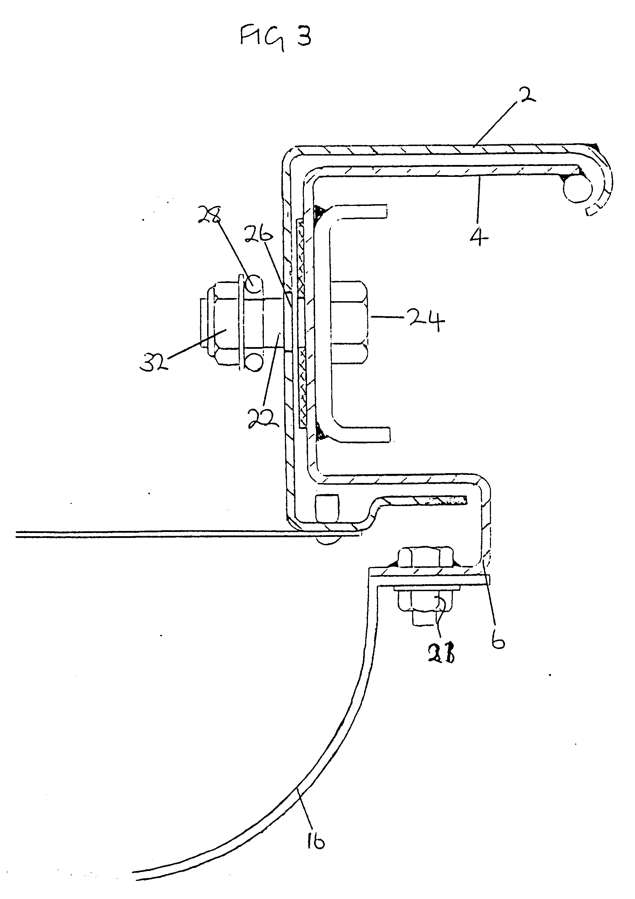

Referring now to Figures 3 and 4, the side edges of the aerofoil 16 are bolted, see 21, to the portions 6 of the stake rails 4 on the outside of the pillars 2. The stake rails 4, which support both the aerofoil 16 and the lifting header 10, are arranged to slide within the pillars 2. A bolt 22 is fitted through each stake rail 4 and held in position by nut 24. The free end of the bolt 22 protrudes through and rides in a vertical slot 26 formed in the associated pillar 2. Fitted around the protruding end of the bolt 22 is a cable 28 which is attached to a pulley 30. The cable 28 is retained on the bolt 22 by a second nut 32.

When the pulleys 30 are turned to wind in the cables 28, the bolts 22 are lifted to the top of the slots 26 in the pillars 2, thus raising the stake rails 4 to the position shown in Figure 1. Since the stake rails 4 support the lifting header 10 which in turn supports the roof 18, the roof 18 will be raised on operation of the pulleys 30. Further, the aerofoil 16 will also be raised simultaneously with the roof.

A trailer in accordance with the invention may be run with the roof in the raised position to facilitate extra loading and still have an aerofoil positioned correctly at the front of the trailer to improve air-flow and reduce turbulence.

## Claims

1. A trailer, semi-trailer, or van body having a roof which may be lifted between a normal and an upward position, characterised in that the roof (18) has an aerofoil (16) attached at its front end, which aerofoil (16) extends downwardly to a level below the lower edge of the gap between the roof (18) and the top (8) of the front of the trailer body when the roof (18) is raised.

2. A trailer or the like as claimed in Claim 1, wherein the roof (18) has vertically arranged "stake" rails (4) engaging telescopically within the corner pillars (2) at the front of the trailer or the like, means (28, 30) being provided to raise the stake rails (4) relative to the pillars (2) when the roof (18) is to be lifted.

3. A trailer or the like as claimed in Claim 2, wherein the aerofoil (16) is attached at its upper end to the roof (18) and at its lower end to an extension (6) of the stake rails (4) protruding up from the corner pillars (2).

4. A trailer or the like as claimed in any of the preceding Claims, wherein the roof (18) includes a lifting header (10) which runs transversely across the front face of the trailer, the lifting header (10) having a protruding portion (14) to which the top end of the aerofoil (16) is attached.

5. A trailer or the like as claimed in Claim 4, wherein the lifting header (10) is arranged to rest upon a fixed header (8) when the roof (18) is in the lowered position, the fixed header (8) also extending transversely across the front of the trailer or the like and being supported by and extending between the front corner pillars (2).

6. A trailer or the like as claimed in any one of Claims 2 to 5, wherein the means to raise the roof (18) comprises a bolt (22) fixed through each stake rail (4), one end of which protrudes through and rides in a vertical slot (26) formed in the corresponding corner pillar (2), the bolt end being attached to a cable (28) which may be driven through a pulley system (30) to lift the stake rail (4) and hence the roof (18), when desired.

## Patentansprüche

1. Anhänger, Halb-Anhänger oder Lastwagenkarosserie mit einem Dach, das zwischen einer normalen und einer nach oben gerichteten Position angehoben werden kann, dadurch gekennzeichnet,
daß das Dach (18) einen Spoiler (16) aufweist, welcher an dessen vorderem Ende befestigt ist, wobei sich der Spoiler (16) nach unten gerichtet bis auf ein Level unterhalb der unteren Ecke des Zwischenraums zwischen dem Dach (18) und dem Kopfende (8) der Vorderseite der Anhängerkarosserie erstreckt, wenn das Dach (18) angehoben wird.

2. Anhänger oder dergleichen nach Anspruch 1, bei dem das Dach (18) vertikal angeordnete "Einsatz-" schienen (4) aufweist, welche an der Vorderseite des Anhängers oder dergleichen teleskopartig in die Ecksäulen (2) eingreifen, und worin Mittel (28,30) vorgesehen sind, um die "Einsatz-"schienen (4) relativ zu den Säulen (2) emporzuheben, wenn das Dach (18) angehoben werden soll.

3. Anhänger oder dergleichen nach Anspruch 2, bei dem der Spoiler (16) an seinem oberen Ende an dem Dach (18) und an seinem unteren Ende an einer Verlängerung (6) der "Einsatz-"schienen (4), welche von den Ecksäulen (2) hervorstehen, befestigt ist.

4. Anhänger oder dergleichen nach einem der vorhergehenden Ansprüche, bei dem das Dach (18) einen Anhebe-Kopfteil (10) enthält, welcher transversal über die Frontfläche des Anhängers verläuft, wobei der Anhebe-Kopfteil (10) einen hervorstehenden Bereich (14) aufweist, an welchem das Kopfende des Spoilers (16) befestigt ist.

5. Anhänger oder dergleichen nach Anspruch 4, bei dem der Anhebe-Kopfteil (10) derart angeordnet ist, daß er sich auf einem festen Kopfteil (8) abstützt, wenn sich das Dach (18) in der abgesenkten Position befindet, und sich der feste Kopfteil (8) ebenfalls transversal über die Front des Anhängers oder dergleichen erstreckt und durch die vorderen Ecksäulen (2) gestützt ist sowie sich zwischen ihnen erstreckt.

6. Anhänger oder dergleichen nach einem der Ansprüche 2 bis 5, bei dem das Mittel zum Anheben des Dachs (18) einen Bolzen (22), welcher durch jede "Einsatz-" schiene (4) fixiert ist, umfaßt dessen eines Ende durch einen vertikalen Schlitz (26), welcher in der korrespondierenden Ecksäule (2) ausgebildet ist, hervortritt und in diesem läuft, wobei der Bolzen an einem Seil (28) befestigt ist, welches durch ein Seiltrommelsystem (30) zum Anheben der "Einsatz-" schiene (4) und folglich des Dachs (18) angetrieben werden kann, falls dies gewünscht ist.

## Revendications

1. Carrosserie de remorque, de semi-remorque ou de camionnette avec un pavillon qui peut être élevé entre une position normale et une position supérieure, caractérisée en ce que le pavillon (18) comporte un déflecteur d'air (16) fixé sur son extrémité avant, lequel déflecteur d'air (16) s'étend vers le bas jusqu'à un niveau situé au-dessous du bord inférieur de l'espace entre le pavillon (18) et le dessus (8) de l'avant de la carrosserie de la remorque lorsque le pavillon (18) est soulevé.

2. Remorque ou analogue selon la revendication 1, caractérisée en ce que le pavillon (18) comporte des montants formant "pieu" (4) disposés verticalement et qui pénètrent de manière téléscopique dans les piliers d'angle (2) à l'avant de la remorque ou analogue, des moyens (28, 30) étant prévus pour soulever les montants (4) par rapport aux piliers (2) lorsque le pavillon (18) doit être élevé.

3. Remorque ou analogue selon la revendication 2, caractérisée en ce que le déflecteur d'air (16) est fixé par son extrémité supérieure au pavillon (18) et par son extrémité inférieure à un prolongement (6) des montants (4), en saillie à partir des piliers d'angle (2).

4. Remorque ou analogue selon l'une quelconque des revendications précédentes, caractérisée en ce que le pavillon (18) comprend une traverse de levage (10) qui s'étend transversalement sur l'avant de la remorque, la traverse de levage (10) ayant une partie en saillie (14) à laquelle est fixée l'extrémité supérieure du déflecteur d'air (16).

5. Remorque ou analogue selon la revendication 4, caractérisée en ce que la traverse de levage (10) est propre à reposer sur une traverse fixe (8) lorsque le pavillon (18) est dans la position abaissée, tandis que la traverse fixe (8) s'étend transversalement sur le devant de la remorque ou analogue et qu'elle est supportée par les piliers d'angle avant (2) en s'étendant entre eux.

6. Remorque ou analogue selon l'une quelconque des revendications 2 à 5, caractérisée en ce que les moyens d'élever le pavillon (18) comprennent un boulon (22) traversant chaque montant (4), et dont une extrémité traverse une fente verticale (26) formée dans le pilier d'angle (2) correspondant pour se déplacer dans celle-ci, l'extrémité du boulon étant fixée à un câble (28) qui peut être entraîné au moyen d'un système de poulies (30) pour élever le montant (4) et par conséquent le pavillon (18) lorsqu'on le souhaite.
